# EUROPÄISCHE PATENTSCHRIFT

(11) **EP 1 061 623 B1**
(45) Veröffentlichungstag und Bekanntmachung des Hinweises auf die Patenterteilung: **22.01.2003**
(21) Anmeldenummer: 00109873.0
(22) Anmeldetag: 10.05.2000
(51) Int. Cl.: H02G 3/06

(54) **Leitungsführungskanal**
Wire raceway
Goulotte pour câbles

(30) Priorität: 18.06.1999 DE 29910683 U
(43) Veröffentlichungstag der Anmeldung: 20.12.2000
(73) Patentinhaber: Tehalit GmbH & Co. KG, 67716 Heltersberg (DE)
(72) Erfinder: Krietemeyer, Rolf, Dipl.-Ing. (FH), 67663 Kaiserslautern (DE); Wittmann, Jan, Ing., 67714 Waldfischbach (DE); Schneckmann, Horst, 67705 Trippstadt (DE)
(74) Vertreter: Patentanwälte Möll und Bitterich

(56) Entgegenhaltungen:
- EP-A- 0 721 243

## Beschreibung

Die Erfindung betrifft Leitungsführungskanäle gemäß dem Oberbegriff des Anspruchs 1.

Leitungsführungskanäle, wie sie weltweit in großen Mengen seit Jahrzehnten hergestellt und montiert werden, werden als Kanalabschnitte begrenzter Länge, beispielsweise 2 m, geliefert. Der Installateur muss daher eine Vielzahl von solchen Kanalabschnitten verlegen. Damit die benachbarten Kanalabschnitte an den Stoßstellen fluchten, werden spezielle Kupplungselemente verwendet.

Die Kupplungselemente sind im einfachsten Fall Stahlstifte, die in werksseitig vorbereitete Öffnungen an den Enden der Kanalabschnitte eingesteckt werden. Die GB-A-476 870 zeigt U-förmige Kupplungselemente, die an die Außenseite des Kanalunterteils geschweißt werden und das anstoßende Kanalelement umgreifen. Die Verwendung von innenliegenden, ebenfalls angeschweißten Kupplungselementen ist bekannt aus der GB-A-717 629.

Die EP-B-753 917, die DE-U-295 10 836 und die DE-U-94 09 822 zeigen die Verwendung von Metallwinkeln zur Verstärkung von im Winkel verlegten Leitungsführungskanälen, wobei die Verstärkungswinkel in vorbereitete Taschen in den auf Gehrung geschnittenen Enden der Kanalunterteile eingeschoben werden.

Die DE-U-85 28 466, die DE-C-36 33 604, die DE-U-84 10 740 und die DE-U-298 17 946 zeigen die Verwendung von Kupplungselementen aus Stahlblech, die zwischen dem Deckelverschlussprofil und dem Boden des ebenfalls aus Stahlblech hergestellten Kanalunterteils verklemmt werden, wobei durch scharfe Kanten und Spitzen gleichzeitig eine niederohmige elektrische Verbindung für den vorgeschriebenen Potentialausgleich zwischen den benachbarten Kanalabschnitten hergestellt wird.

Die DE-U-295 00 130 und die EP-B-0 721 243 zeigen Kupplungselemente aus Kunststoff, die zwischen dem Deckelverschlussprofil und dem Boden des Kanalunterteils verklemmt werden, wobei auf der Innenseite des Kanalbodens parallel zu den Seitenwänden Längsleisten vorgesehen sind, die den Fuß der Kupplungselemente halten.

Die bekannten Kupplungselemente haben Nachteile. Fest angeschweißte Kupplungselemente verlängern die Kanalabschnitte, was zu Nachteilen bei Lagerung und Transport führt. Außen angeschweißte Kupplungselemente verändern zusätzlich die Abmessungen und das Design in unerwünschter Weise.

Bei den losen Kupplungselementen ist nachteilig, dass sie stets gesondert bestellt, zur Baustelle transportiert und dort einzeln von Hand montiert werden müssen. Oftmals wird vergessen, die Kupplungselemente zu bestellen. Oftmals wird vergessen, sie zur Baustelle mitzunehmen. Auch haben lose Kleinteile die unangenehme Eigenschaft, zu verschwinden. Darüber hinaus ist die Einzelmontage der Kupplungselemente von Hand mit einem zusätzlichen Zeit- und Kostenaufwand verbunden.

Der vorliegenden Erfindung liegt daher die Aufgabe zugrunde, einen Leitungsführungskanal anzugeben, dessen Kupplungselemente die Vorteile beider Konstruktionsprinzipien miteinander verbindet, ohne deren Nachteile aufzuweisen.

Diese Aufgabe wird gelöst durch einen Leitungsführungskanal mit den Merkmalen des Anspruchs 1.

Dank der vorliegenden Erfindung können die Kupplungselemente bereits werksseitig montiert werden, jedoch in einer sogenannten Parkposition, in der sie die Enden der Kanalabschnitte nicht überragen. Auf der Baustelle kann der Installateur das Kupplungselement mit einer einfachen Handbewegung in die Arbeitsstellung verschieben, in der es das Ende des Kanalabschnitts überragt und in der es gegen weitere Verschiebungen ausreichend gesichert ist.

Um die werksseitige Montage der Kupplungselemente sowie das Verschieben von der Park- in die Arbeitsposition auf der Baustelle zu erleichtem, können rechts und links des Rastnockens Anlaufkeile vorgesehen werden. Diese Keile in Verbindung mit dem Merkmal, in Höhenrichtung zu federn, machen es möglich, das Kupplungselement bei Bedarf aus der Arbeitsposition wieder in die Parkposition zurückzuschieben oder zu demontieren.

Eine Erleichterung des Verschiebens des Kupplungselementes aus der Park- in die Arbeitsposition ergibt sich auch dadurch, dass gemäß einer Weiterbildung der Erfindung die Parkraste zum benachbarten Ende des Kanalunterteils hin keilförmig ausgebildet ist.

Vorteilhafterweise ist das Kupplungselement bereichsweise als Mäanderfeder gestaltet. Diese Ausbildung benötigt keinen Platz und ermöglicht das Federn in der Ebene des Kupplungselements.

Zur Erleichterung der Montage können die Stirnflächen des Kupplungselements angeschrägt sein.

Vorteilhafterweise besteht das Kupplungselement aus Kunststoff.

Das dazu passende Kanalunterteil besteht entweder ebenfalls aus Kunststoff oder auch aus Aluminium. Kunststoffkanäle lassen sich extrudieren, Aluminiumkanäle strangpressen, was die für die Verwendung des erfindungsgemäßen Kupplungselementes erforderliche Profilgebung erleichtert.

Anhand der Zeichnung soll die Erfindung in Form eines Ausführungsbeispiels näher erläutert werden. Es zeigen jeweils in perspektivischer Darstellung
- Fig. 1: ein Kanalunterteil und ein demontiertes Kupplungselement,
- Fig. 2: das Kanalunterteil der Fig. 1 mit dem Kupplungselement in Parkposition und
- Fig. 3: das Kanalunterteil der Fig. 1 mit dem Kupplungselement in Arbeitsposition.

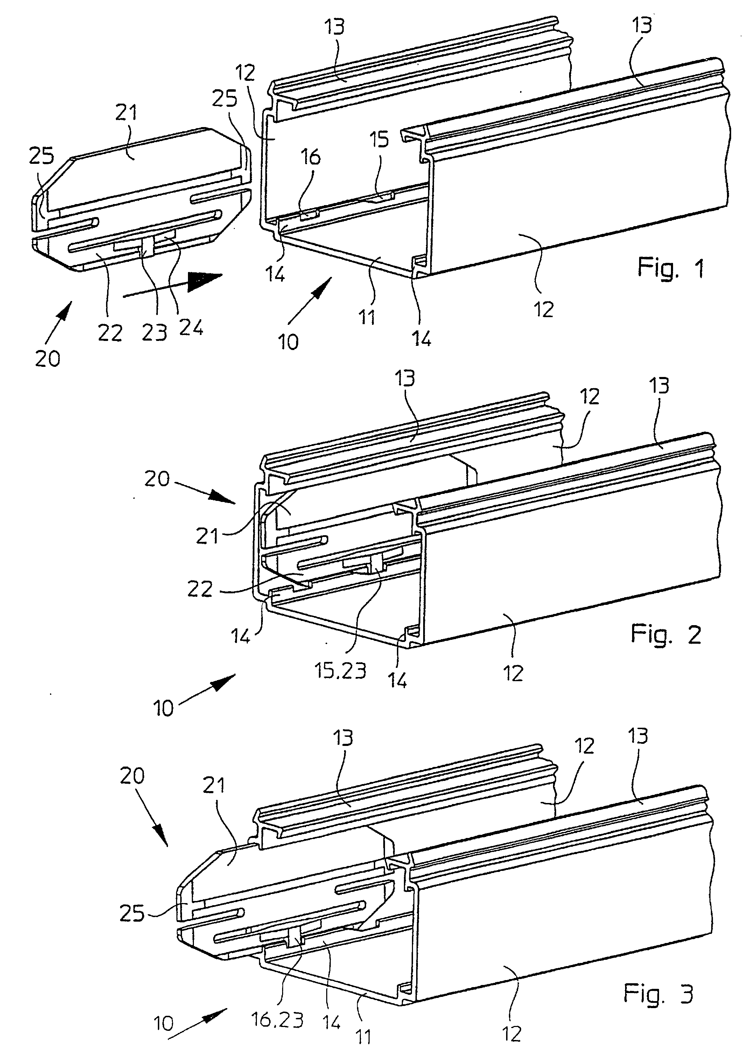

Fig. 1 zeigt in perspektivischer Darstellung ein Kanalunterteil 10 mit einem Boden 11, zwei Seitenwänden 12, an deren oberem Ende Deckelhalteprofile 13 angeformt sind, und mit zwei den Seitenwänden 12 benachbarten Längsleisten 14 an der Innenseite des Kanalbodens 11.

Des weiteren erkennt man ein Kupplungselement 20, welches im wesentlichen einen flachen kubischen Körper 21 besitzt, dessen Stirnflächen 25 zwecks vereinfachter Montage angeschrägt sind. Im unteren Bereich ist durch mäanderförmige Einschnitte eine Mäanderfeder 22 ausgebildet, die dem Kupplungselement 20 in Höhenrichtung federnde Eigenschaften verleiht.

Ebenfalls am unteren Ende des Kupplungselementes 20 und an dessen von den Kanalseitenwänden 12 abgewandten Oberfläche erkennt man einen Rastnocken 23, an dem rechts und links Anlaufkeile 24 vorgesehen sind.

An den Längsleisten 14 sind korrespondierend mit den Rastnocken 23 zwei Rasten 15, 16 angeordnet Die vom Ende des Kanalunterteils 10 entfernte Raste 15 ist die sogenannte Parkraste, die dem Kanalende benachbarte Raste 16 die sogenannte Arbeitsraste.

Fig. 2 zeigt das Kupplungselement 20 in der Parkposition, in der der Rastnocken 23 in der Parkraste 15 sitzt. In dieser Position wird das Kupplungselement 20 werksseitig ausgeliefert. In der Parkposition verschwindet das Kupplungselement 20 ganz im Kanalunterteil 10.

Die dem Kanalende zugewandte Kante der Parkraste 15 ist keilförmig ansteigend ausgebildet und erleichtert so das Verschieben des Kupplungselementes 20 aus der Park- in die Arbeitsposition.

Fig. 3 zeigt das Kupplungselement 20 in der sogenannten Arbeitspositon, in der der Rastnocken 23 in die Arbeitsraste 16 eingerastet ist. Deren Seitenkanten sind nicht angeschrägt, so dass das Kupplungselement 20 in der Arbeitsstellung sicher fixiert ist. Dadurch besteht keine Gefahr, dass beim Aufstecken des nachfolgenden Kanalabschnitts das Kupplungselement 20 versehentlich in die Parkposition zurückgeschoben wird.

Während das Kanalunterteil 10 aus Kunststoff oder Aluminium bestehen kann, hat sich für das Kupplungselement 20 Kunststoff als optimal herausgestellt.

## Patentansprüche

1. Leitungsführungskanal, im wesentlichen umfassend
- ein Kanalunterteil (10) mit
-- einem Boden (11),
-- zwei Seitenwänden (12),
-- einem Deckelverschlussprofil (13) an den Seitenwänden (12)
-- und zwei an der Innenseite des Bodens (11) angeformten, zu den Seitenwänden (12) beabstandeten Längsleisten (14),
- und ein Kupplungselement (20) zur Verbindung benachbarter Kanalabschnitt, verschieblich einklemmbar zwischen
-- dem Deckelverschlussprofil (13)
-- und dem Bodenstück, welches von der Seitenwand (12) und der benachbarten Längsleiste (14) begrenzt ist,
**gekennzeichnet durch** die Merkmale:
- das Kupplungselement (20)
-- ist in Höhenrichtung federnd
-- und besitzt an seiner dem Kanalboden (11) zugewandten Unterkante einen Rastnocken (23),
- die Längsleiste (14) besitzt, korrespondierend mit dem Rastnocken (23),
-- eine Parkraste (15), die so positioniert ist, dass das Kupplungselement (20) sich innerhalb des Kanalunterteils (10) befindet
-- und eine Arbeitsraste (16), die so positioniert ist, dass das Kupplungselement (20) über das Kanalunterteil (10) hinausragt.

2. Leitungsführungskanal nach Anspruch 1, **gekennzeichnet durch** das Merkmal:
- rechts und links des Rastnockens (23) sind Anlaufkeile (24) vorgesehen.

3. Leitungsführungskanal nach Anspruch 1 oder 2, **gekennzeichnet durch** das Merkmal:
- die Parkraste (15) ist zum benachbarten Ende des Kanalunterteils (10) hin keilförmig ausgebildet.

4. Leitungsführungskanal nach einem der Ansprüche 1 bis 3, **gekennzeichnet durch** das Merkmal:
- das Kupplungselement (20) ist bereichsweise als Mäanderfeder (22) gestaltet.

5. Leitungsführungskanal nach einem der Ansprüche 1 bis 4, **gekennzeichnet durch** das Merkmal:
- die Stirnflächen (25) des Kupplungselements (20) sind angeschrägt.

6. Leitungsführungskanal nach einem der Ansprüche 1 bis 5, **gekennzeichnet durch** das Merkmal:
- das Kupplungselement (20) besteht aus Kunststoff.

7. Leitungsführungskanal nach einem der Ansprüche 1 bis 6, **gekennzeichnet durch** das Merkmal:
- das Kanalunterteil (10) besteht aus Kunststoff.

8. Leitungsführungskanal nach einem der Ansprüche 1 bis 6, **gekennzeichnet durch** das Merkmal:
- das Kanalunterteil (10) besteht aus Aluminium.

## Claims

1. Wiring trunking, essentially comprising
- a trunking lower part (10) with
- a bottom (11),
- two side walls (12),
- a cover closure profile (13) at the side walls (12)
- and two longitudinal strips (14), which are moulded onto the inside of the bottom (11) and disposed at a spacing from the side walls (12),
- and a coupling element (20) for connecting adjacent trunking sections, which element can be clamped displaceably between
- the cover closure profile (13)
- and the bottom piece, which is bounded by the side wall (12) and the adjacent longitudinal strip (14),
**characterised by** the features:
- the coupling element (20)
- is resilient in the vertical direction
- and has a locking protuberance (23) at its lower edge, which faces the trunking bottom (11),
- the longitudinal strip (14) has, corresponding to the locking protuberance (23),
- a parking notch (15), which is positioned such that the coupling element (20) is located inside the trunking lower part (10),
- and a working notch (16), which is positioned such that the coupling element (20) projects beyond the trunking lower part (10).

2. Wiring trunking according to Claim 1, **characterised by** the feature:
- run-up wedges (24) are provided on the right and the left of the locking protuberance (23).

3. Wiring trunking according to Claim 1 or 2, **characterised by** the feature:
- the parking notch (15) is wedge-shaped towards the adjacent end of the trunking lower part (10).

4. Wiring trunking according to any one of Claims 1 to 3, **characterised by** the feature:
- the coupling element (20) is configured as a meandering spring (22) in regions.

5. Wiring trunking according to any one of Claims 1 to 4, **characterised by** the feature:
- the end faces (25) of the coupling element (20) are bevelled.

6. Wiring trunking according to any one of Claims 1 to 5, **characterised by** the feature:
- the coupling element (20) consists of a plastics material.

7. Wiring trunking according to any one of Claims 1 to 6, **characterised by** the feature:
- the trunking lower part (10) consists of a plastics material.

8. Wiring trunking according to any one of Claims 1 to 6, **characterised by** the feature:
- the trunking lower part (10) consists of aluminium.

## Revendications

1. Goulotte pour câbles, comprenant principalement :
- une partie inférieure de goulotte (10) avec
- un fond (11),
- deux parois latérales (12),
- un profil de fermeture de couvercle (13) au niveau des parois latérales (12)
- et deux barres de guidage longitudinales (14) formées au niveau du côté intérieur du fond (11), qui s'écartent des parois latérales (12),
- et un élément de couplage (20) en vue d'une liaison avec une section de goulotte adjacente, qui peut être disposé de manière amovible entre
- le profil de fermeture de couvercle (13)
- et la partie de fond qui est limitée par la paroi latérale (12) et la barre de guidage longitudinale (14) adjacente,
**caractérisée en ce que** :
- l'élément de couplage (20)
- est élastique dans le sens de la hauteur
- et possède un ergot d'enclenchement (23) au niveau de son bord inférieur tourné vers le fond de la goulotte (11)
- la barre de guidage longitudinale (14) possède, en correspondance avec l'ergot d'enclenchement (23),
- une encoche d'arrêt (15), qui est positionnée de telle sorte que l'élément de couplage (20) se trouve à l'intérieur de la partie inférieure de goulotte (10), et
- une encoche de fonctionnement (16), qui est positionnée de telle sorte que l'élément de couplage (20) fasse saillie au-dessus de la partie inférieure de goulotte (10).

2. Goulotte pour câbles selon la revendication 1, **caractérisée en ce que** des cales d'arrêt (24) sont prévues à droite et à gauche de l'ergot d'enclenchement (23).

3. Goulotte pour câbles selon la revendication 1 ou 2, **caractérisée en ce que** l'encoche d'arrêt (15) est conçue sous forme de coin vers l'extrémité adjacente de la partie inférieure de goulotte (10).

4. Goulotte pour câbles selon l'une quelconque des revendications 1 à 3, **caractérisée en ce que** l'élément de couplage (20) est façonné par zone sous forme de ressort à méandres (22).

5. Goulotte pour câbles selon l'une quelconque des revendications 1 à 4, **caractérisée en ce que** les faces frontales (25) de l'élément de couplage (20) sont inclinées.

6. Goulotte pour câbles selon l'une quelconque des revendications 1 à 5, **caractérisée en ce que** l'élément de couplage (20) est réalisé en matière plastique.

7. Goulotte pour câbles selon l'une quelconque des revendications 1 à 6, **caractérisée en ce que** la partie inférieure de goulotte (10) est réalisée en matière plastique.

8. Goulotte pour câbles selon l'une quelconque des revendications 1 à 6, **caractérisée en ce que** la partie inférieure de goulotte (10) est réalisée en aluminium.
